Europäisches Patentamt

European Patent Office

Office européen des brevets

(19)

(11) Publication number: **0 037 160**
**B1**

(12) **EUROPEAN PATENT SPECIFICATION**

(45) Date of publication of patent specification: **18.01.84**

(21) Application number: **81200360.6**

(22) Date of filing: **01.04.81**

(51) Int. Cl.³: **A 23 K 1/10,** A 23 K 1/00, A 23 N 17/00, B 01 D 1/12, B 01 D 1/26

(54) **Method and plant for the thickening of offal.**

(30) Priority: **02.04.80 NL 8001954**

(43) Date of publication of application:
**07.10.81 Bulletin 81/40**

(45) Publication of the grant of the patent:
**18.01.84 Bulletin 84/3**

(84) Designated Contracting States:
**DE FR GB NL SE**

(73) Proprietor: **STORK DUKE B.V.**
**7 Wijkermeerweg**
**NL-1951 AH Velsen (N) (NL)**

(72) Inventor: **Jansen, Hendrik**
**12 Hanegevecht**
**NL-2811 AD Reeuwijk (NL)**

(74) Representative: **Mathol, Heimen et al,**
**EXTERPATENT Willem Witsenplein 4**
**NL-2596 BK 's-Gravenhage (NL)**

(56) References cited:
GB - A - 425 056
GB - A - 446 587
NL - A - 6 809 729
US - A - 2 510 233
US - A - 2 570 213
US - A - 3 242 970
US - A - 4 117 175

CHEMICAL ENGINEERING, vol. 70, no. 25, December 9, 1963 NEW YORK (US) F.C. STANDIFORD Jr.: "Evaporation is a unit", pages 158-176

(56) References cited:
WORLD FISHING, vol. 13, no. 8, August 1964, LONDON (GB) "Fishmeal plant development", pages 51,52,55
SULZER EVAPORATING PLANTS, Sulzer Brothers Ltd. WINTERTHUR (CH), pages 1-16

The file contains technical information submitted after the application was filed and not included in this specification

Courier Press, Leamington Spa, England.

## Method and plant for the thickening of offal

The invention relates to a method for the thickening of offal, in which the rough product after having been ground and mixed with approximately an equal quantity of fat, is passed through a number of evaporating stages, each at least consisting of a vertical pipe heat-exchanger and a vapour separator. Carrying out said method results in that the product, after having gradually reached the desired increased dry substance ratio, is transferred towards successive elements of a processing plant, in order to undergo a number of final operations.

In a method as known in the art the thickening is either carried out batch-wise or continuously, in a boiling vessel or in a plurality of boiling vessels. The invention is based upon a method in which a continuous process is carried out by means of pipe heat-exchangers, instead of a boiling vessel or boiling vessels. In the known method of this type, pipe exchangers operating according to the so-called "falling" principle, are used, the product being passed in a downward direction through said pipe exchanger. The product is heated along the walls of the pipes, thus increasing its viscosity, which causes part of the product to flow downwards with a greater velocity, a supply of product being derived from the centre of the pipes. Water, in the form of vapour is, after having passed the pipe exchanger, separated in the subsequent vapour separator and discharged towards a subsequent evaporating stage, whereat it is used for the withdrawal of water from the product flow present therein.

In the latter method, product to be treated is supplied to and discharged from the evaporating stages by means of transfer pumps having a restricted capacity. A circulation of the product through the evaporating stage, is in this event carried out by a circulation pump, having a capacity which is a multiple of the aforementioned transfer pumps. Said heavy circulation pumps are expensive and, moreover, consume additional power, whereas due to the scouring action of the product, they are liable to an increased wear, so that they require substantial check ups and repairs. The "falling" pipe heat-exchanger moreover requires a rather complicated and therefore expensive spreading means in order to sufficiently distribute the product along the various pipes. An optimum operation of said distribution can only be ensured if the starting product is finely divided and thus rather thin-flowable.

The invention aims to provide a method which also involves the use of pipe exchangers but which substantially excludes the use of circulation devices and the consumption of energy inherent therewith. The invention further aims to provide a method which can be carried out with a coarser starting product (less finely divided material) which is rather important when processing offal.

The above objects are, in accordance with the invention, attained in that

— the material to be thickened is fed to the bottom portion of each heat exchanger in such a manner, that said material is caused to rise through said heat exchanger, due to the thermal syphonic action of the vapour bubbles formed in the material and ascending inside the pipes;

— the processed material being released from the upper portion of the heat exchanger is via a vapour separator, fed back towards the bottom portion of said heat exchanger, thus maintaining a circulation, and in that

— a controllable quantity of the processed material is discharged from the circulating flow in an evaporating stage, for a supply to the subsequent evaporating stage.

The invention is also embodied in a plant for the thickening of offal while applying the method as described hereinbefore, said plant comprising a plurality of evaporating stages connected in series, each evaporating stage being built up from a vertical pipe exchanger with a vapour separator, mutual connection lines, an inlet for the raw material, an outlet for the processed material, and a source of heating fluid. In accordance with the invention, said plant is characterized in that

— the raw material inlet line is connected with the bottom portion of the heat exchanger of each evaporating stage, whereas the upper portion of the heat exchanger is connected with the vapour separator via a line;

— the processed material outlet is connected with the bottom portion of the corresponding heat exchanger by means of a branch line from the lower side of the vapour separator, and in that

— said processed material outlet line runs, via a metering pump, towards the bottom portion of the heat exchanger of the subsequent stage, the product outlet, respectively.

According to the present invention a circulation of the material in each stage of the plant, is now accomplished by the rising film principle or "thermal syphonic" action resulting from vapour bubbles ascending within the pipes instead of by the use of large and rather vulnerable circulation pumps for each stage.

It is observed that the application of rising film tube evaporators as well as the principle of applying subsequent stages for evaporation purposes is known per se for liquids, vide Chemical Engineering Dec. 9, 1963, pages 158—176. The present invention deals with the treatment of offal and applies a partial recirculation with the object of reducing the required energy consumption.

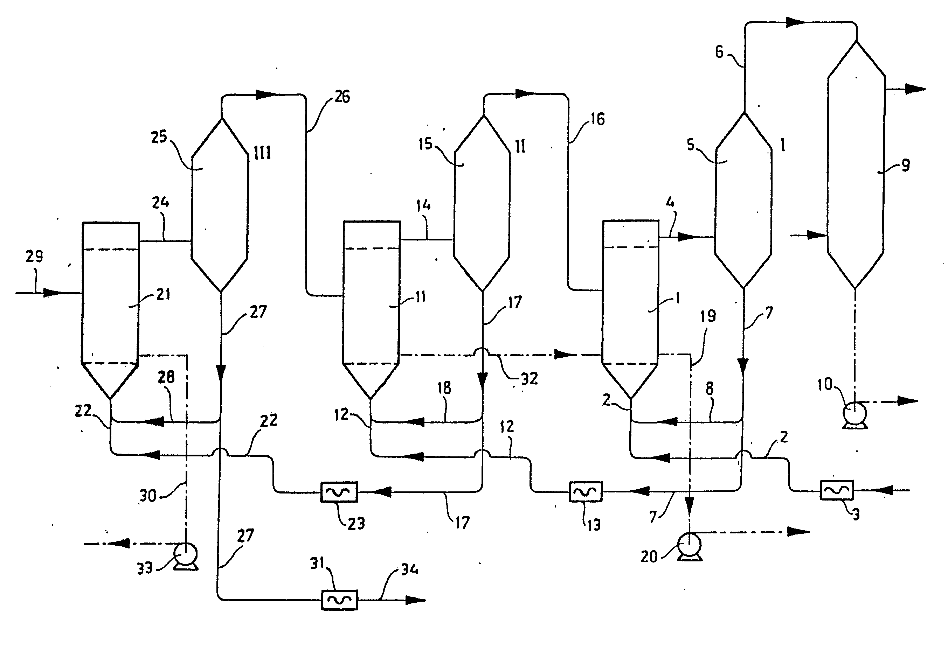

The invention will be illustrated with respect to the accompanying drawing, which shows a diagrammatic view of a tri-stage plant for the evaporation of offal.

The illustrated plant consists of three substantially identically composed evaporation stages I, II and III. Each of said three stages is formed by a vertical pipe exchanger 1, 11 and 21 respectively, being provided at its bottom portion with an inlet 2, 12 and 22 respectively, which is fed with raw material to be thickened, via a metering transfer pump 3, 13 and 23 respectively. The upper portion of each heat exchanger is via a line 4, 14 and 24 respectively, connected with a vapour separator 5, 15, and 25 respectively. The upper portion of said vapour separators is connected with an outlet line 6, 16 and 26 respectively, for generated vapour, while the lower portion of each vapour separator comprises a line 7, 17 and 27 respectively, for the discharge of the product thickened in the relative stage I, II, III respectively.

Line 7 runs towards the transfer pump 13 whilst line 17 is connected with the transfer pump 23. Line 27 from stage III serves for the discharge of the final product from the last stage and is therefore, via a discharge pump 31, connected with the outlet line 34. Each of lines 7, 17 and 27, comprises a branch line 8, 18 and 28, respectively, which runs towards the inlet 2, 12 and 22 respectively, at a location near the bottom portion of the relative heat exchangers 1, 11 and 21, respectively. Due to the presence of the connecting lines 4, 7 and 8, 14, 17, 18 and 24, 27, 28 respectively, a recirculation is permitted of the products to be treated through each of the heat exchangers 1, 11 and 21 respectively and the corresponding vapour separators 5, 15 and 25 respectively, of the evaporating stages I, II and III respectively, said circulation being maintained by a thermal syphonic action occurring in each heat exchanger. i.e. rising film tube evaporator.

The vapour outlet line 6 of the vapour separator 5, is connected with a condensor 9, the lower side of which is connected with a condensate pump 10. The heat exchanger 1 of the first evaporating stage I is heated in that the vapour outlet line 16 of the vapour separator 15 is connected with said heat exchanger 1, which is further provided with a condensate line 19, running towards a condensate pump 22.

Heat exchanger 11, of the evaporating stage II, is connected on the one hand with the vapour outlet line 26 of the vapour separator 25 from stage III and on the other hand via a condensate line 32 with the heat exchanger 1 of evaporating stage I. In the evaporating stage II a recirculation of the processed material via the connecting lines 14, 17 and 18, is also maintained by the thermal syphonic action occurring in the heat exchanger 11.

The evaporating stage III forming the last link in the plant according to the invention, receives via line 22, the material which has already been partially thickened in the two foregoing stages I and II. Heat exchanger 21 is fed with fresh vapour via a line 29 in order to evaporate the last quantity of water from the material. The formed condensate is recirculated towards the vapour circuit via a discharge line 30 and a pump 33.

The transfer pump 3, 13, 23 and 31 permit an accurate control of the quantity of material being supplied to each of the stages I, II and III and of the quantity of recirculating material and product discharged. With the exception of the condensate pumps 10, 20 and 33, said four transfer pumps 3, 13, 23 and 31 are the only power-consuming members in the plant according to the invention, said power being supplied to the plant, only via steam inlet line 29. The circulation ratio, to wit the ratio between the circulating quantity of product per unit of time in comparison with the quantity of material supplied by the relative transfer pump to the corresponding evaporating stage, is high. Besides the object aimed for, to wit to have a thermal syphonic action which is sufficiently powerful for accomplishing the circulation of the product, it has also appeared that a great flow velocity of the material in the pipes of the heat exchangers 1, 11 and 21, is obtained. Due to the turbulent mixture of material and vapour bubbles, there is not only obtained an optimum heat transfer between the pipe wall and the material, and simultaneously therewith a homogeneous heating of the entire material, but also the avoidance of incrustation of the pipes, so that the respective plant can continuously operate for a long period of time without an intermediate cleaning of said pipes, being required.

An additional practical advantage of the method and plant according to the invention is that the method can be carried out without the necessity of using special valves or partitioning members, as the aforementioned four (controllable) transfer pumps 3, 12, 13 and 31 effect the entire control. Said transfer pumps may be embodied in so-called monopumps, whereby the output is controlled by varying the number of revolutions. Centrifugal pumps, having a fixed number of revolutions may also be used for that aim, the product being recirculated via the pressure line, towards the location of the inlet of said material. The pressure line then comprises a branch line effecting the passage of material towards a subsequent stage. The branch line comprises a controllable valve, which is also provided in the pressure line beyond the branch location. The adjustment of said two valves then determines the quantity of processed material, which is supplied towards the subsequent stage. A third possibility consists in the use of membrane pumps.

## Claims

1. Method for the thickening of offal, wherein the raw material after having been ground and mixed with approximately an identical quantity of fat, is passed through a plurality of evaporating stages, each at least consisting of a vertical pipe heat-exchanger and a vapour separator characterized in that

— the material to be thickened is fed to the bottom portion of each heat exchanger in such a manner, that said material is caused to rise through said heat exchanger due to the thermal syphonic action of the vapour bubbles formed in the material and ascending inside the pipes;
— the processed material being released at the upper portion of the heat exchanger is fed back via a vapour separator, towards the bottom portion of said heat exchanger, so that a circulation is thus maintained; and in that
— a controllable quantity of processed material is discharged from the flow circulating in an evaporating stage, in order to be fed to the subsequent evaporating stage.

2. Plant for the thickening of offal, while applying the method as claimed in claim 1, said plant comprising a number of evaporating stages, connected in series, each stage being built up from a vertical pipe heat-exchanger with a vapour separator, further comprising mutual connection lines, an inlet for the raw material, an outlet for the processed material and a source of heating fluid, characterized in that

— the material inlet line (2, 12, 22) of each evaporating stage (I, II; III) is connected with the bottom portion of the heat exchanger (1, 11, 21) whereas the upper portion of the heat exchanger is connected with the vapour separator (5, 15, 25) via a line (4, 14, 24);
— the processed material outlet line (7, 17, 27) is connected with the bottom portion of the corresponding heat exchanger via a branch line (8, 18, 28) from the bottom of the vapour separator, and in that
— said processed material outlet line (7, 17, 27) runs towards the bottom portion of the heat exchanger of the subsequent stage, the product outlet (34) respectively, via a metering pump (13, 23, 31).

## Patentansprüche

1. Verfahren zum Eindicken von Abfällen, bei welchem das Rohmaterial nach Zermahlung und Vermischung mit einer annähernd gleichen Menge Fett durch eine Anzahl von Verdampfungsstufen hindurchgefördert wird, welche jeweils wenigstens aus einem senkrechten Röhren-Wärmetauscher und einem Dampfabscheider bestehen, dadurch gekennzeichnet, daß

— das einzudickende Material dem Bodenbereich jedes Wärmetauschers in der Weise zugeführt wird, daß das Material durch die Thermosyphonwirkung der sich in dem Material bildenden und in den Rohren aufsteigenden Dampfblasen innerhalb des Wärmetauschers zum Aufsteigen gebracht wird,
— das am oberen Bereich des Wärmetauschers austretende, bearbeitete Material über einen Dampfabscheider zum Bodenbereich des Wärmetauschers zurückgeführt wird, so daß eine Umlaufbewegung aufrecht erhalten wird, und daß
— eine steuerbare Menge des bearbeiteten Materials aus dem in einer Verdampfungsstufe umlaufenden Strom abgeführt und einer folgenden Verdampfungsstufe zugeleitet wird.

2. Anlage zum Eindicken von Abfällen unter Anwendung des Verfahrens nach Anspruch 1, mit einer Anzahl von in Reihe miteinander verbundenen Verdampfungsstufen, welche jeweils aus einem senkrechten Röhren-Wärme-tauscher mit einem Dampfabscheider aufge-baut sind, ferner mit gegenseitigen Verbindungsleitungen, einem Einlaß für das Rohmaterial, einem Auslaß für das bearbeitete Material und einer Quelle für ein Beheizungs-Strömungsmittel, dadurch gekennzeichnet, daß

— die Material-Einlaßleitung (2, 12, 22) jeder Verdampfungsstufe (I, II, III) mit dem Boden-bereich des Wärmetauschers (1, 11, 21) verbunden ist, während der obere Bereich des Wärmetauschers über eine Leitung (4, 14, 24) mit dem Dampfabscheider (5, 15, 25) verbunden ist,
— die Auslaßleitung (7, 17, 27) für das bearbeitete Material über eine vom Boden des Dampfabscheiders ausgehende Zweigleitung (8, 18, 28) mit dem Bodenbereich des entsprechenden Wärmetauschers verbunden ist, und daß
— die Auslaßleitung (7, 17, 27) für das bearbeitete Material zum Bodenbereich des Wärmetauschers der folgenden Stufe bzw. über eine Dosierungspumpe (13, 23, 31) zum Materialauslaß (34) verläuft.

## Revendications

1. Procédé pour la concentration de déchets dans lequel la matière brute, après avoir été broyée et mélangée avec une quantité approximativement égale de graisse, est passée par une série d'étages d'évaporation, chacun consistant en un échangeur de chaleur tubulaire vertical et un séparateur de vapeur, caractérisé en ce que

— la matière à concentrer est amenée à la partie basse de chaque échangeur de chaleur de façon que la matière soit amenée à monter dans ledit échangeur de chaleur par l'action thermosiphore des bulles, ces vapeurs formées dans la matière et montant dans les tubes;

— la matière traitée étant libérée à la partie supérieure de l'échangeur de chaleur est recyclée en passant par un séparateur de vapeur vers la partie basse dudit échangeur de chaleur de façon qu'une circulation soit ainsi maintenue; et en ce que

— une quantité réglable de la matière traitée soit déchargée du débit circulant dans un étage d'évaporation, de façon à l'amener à l'étage d'évaporation suivant.

2. Unité pour la concentration de déchets qui, mettant en application le procédé revendiqué à la revendication 1, comprend un certain nombre d'étages d'évaporation montés en série, chaque étage étant formé par un échangeur de chaleur tubulaire vertical avec un séparateur de vapeur, comprenant de plus des conduites de connexion, une entrée de matière brute, une sortie de matière traitée, et une source de fluide caloporteur, caractérisé en ce que

— la conduite d'entrée (2, 12, 22) de chaque étage d'évaporation (I, II, III) est reliée à la partie basse de l'échangeur de chaleur (1, 11, 21), tandis que la partie haute de l'échangeur de chaleur est reliée avec le séparateur de vapeur (5, 15, 25) par une conduite (4, 14, 24);

— la conduite de sortie de la matière traitée (7, 17, 27) est reliée à la partie basse de l'échangeur de chaleur correspondant par un branchement (8, 18, 28) venant du bas du séparateur de vapeur et en ce que

— ladite conduite de sortie de la matière traitée (7, 17, 27) se dirige respectivement vers la partie basse de l'échangeur de chaleur de l'étage suivant et la sortie de produit (34), en passant par une pompe volumétrique (13, 23, 31).

29 25 26 24 III 21 27 28 22 22 30 22 27 33 31 34

15 16 14 11 11 17 32 18 12 12 17 23 13

5 6 1 4 9 19 7 2 8 7 10 20 3